# EUROPÄISCHE PATENTSCHRIFT

(11) **EP 1 856 417 B1**
(45) Veröffentlichungstag und Bekanntmachung des Hinweises auf die Patenterteilung: **20.11.2013**
(21) Anmeldenummer: 06722533.4
(22) Anmeldetag: 28.02.2006
(51) Int. Cl.: F16B 21/09, F16B 5/07

(54) **HOCHLASTBESCHLAG ZUM VERBINDEN VON ZWEI BAUTEILEN**
HEAVY-DUTY MOUNTING FOR CONNECTING TWO COMPONENTS
ARMATURE A CAPACITE ELEVEE DESTINEE A CONNECTER DEUX COMPOSANTS

(30) Priorität: 28.02.2005 DE 102005009562
(43) Veröffentlichungstag der Anmeldung: 21.11.2007
(73) Patentinhaber: Knapp, Friedrich, 85591 Vaterstetten (DE)
(72) Erfinder: Knapp, Friedrich, 85591 Vaterstetten (DE)
(74) Vertreter: Müller, Thomas
(86) Internationale Anmeldenummer: PCT/DE2006/000359
(87) Internationale Veröffentlichungsnummer: WO 2006/089539

(56) Entgegenhaltungen:
- EP-A- 0 756 044
- EP-A- 0 866 186
- DE-B3- 10 227 661
- FR-A- 1 338 292

## Beschreibung

Die Erfindung betrifft einen Beschlag zum Verbinden zweier Bauteile, wobei der Beschlag aus einem Halteteil und einem Aufnahmeteil besteht, die jeweils an dem zu verbindenden Bauteil befestigt werden. Das Halteteil und das Aufnahmeteil sind so ausgebildet, dass bei der Verbindung ein ausreichend stabiler Formschluß entsteht.

Beschläge dieser Art sind dem Fachmann und aus dem Stand der Technik hinreichend bekannt, so dass auf eine ausführliche Erläuterung der prinzipiellen Funktion verzichtet werden kann, wobei auf die Dokumente EP 0 866 186 A, FR 1 338 292 A, EP 0 756 044 A1, DE 102 27 661 B3, DE 201 03 856 U1 und DE 102 29 300 B3 verwiesen wird.

Ein grundsätzliches Problem bei derartigen Beschlägen ist das Verhältnis zwischen der Masse, dem Volumen und den Herstellungskosten des Beschlags zu dessen Fähigkeit, die gewünschte Funktionalität zu erbringen. Es ist demzufolge meist wünschenswert, einen Beschlag mit einer geringen Masse, einem geringen Volumen, mit geringen Herstellungskosten und einer hinreichenden Funktionalität bereitzustellen. In Bereichen, in denen die Beschläge aus verschiedenen Gründen überdimensioniert werden, spielen derartige Optimierungen keine Rolle.

Wenn Beschläge jedoch im Hochlastbereich eingesetzt werden sollen, in dem auch noch gesetzlich vorgeschriebene Sicherheitsbestimmungen zu beachten sind, kommt der Optimierung eines Beschlags besondere Bedeutung zu.

Im Bereich des Fertigteilhausbaus und im Objekt- und Hallenbau besteht zunehmend der Wunsch, vorgefertigte und meist große und schwere Bauteile miteinander schnell, einfach, zuverlässig und z. T. sehr präzise miteinander zu verbinden. Dazu sind vorstehend erwähnte Beschläge prinzipiell geeignet. Es hat sich jedoch herausgestellt, dass die aus dem Stand der Technik bekannten Beschläge für den Hochlastbereich nicht immer optimal sind. So ist es im Hochlastbereich oft erforderlich, die zu verbindenden Bauteile ohne komplizierte Verbindungsbewegungen miteinander zu verbinden, da die Bauteile oft mittels eines Kranes oder anderer Hebezeuge eingehängt werden müssen, so dass beim Einhängen keine komplizierten Bewegungsabläufe möglich sind. Weiterhin ist es erforderlich, dass die Beschläge sehr stabil und robust sein müssen, damit sie beim Zusammenfügen der schweren Bauteile nicht beschädigt werden.

Es besteht demzufolge ein permanentes Interesse an einem Hochlastbeschlag, der bei einer bautechnisch vorgegebenen Funktionalität gegenüber dem Stand der Technik sehr robust ist, der eine einfache Bewegung beim Zusammenfügen ermöglicht und der kostengünstig herstellbar ist.

Diese Aufgabe wird mit einem Hochlastbeschlag nach Anspruch 1 gelöst.

Der Vorteil des erfindungsgemäßen Beschlags liegt darin, dass er einfach, d. h. ohne komplizierte Fügebewegungen zusammengefügt werden kann und robust ist, was den Einbaubedingungen im Schwerlastbereich entspricht. Weiterhin ist der Hochlastbeschlag sehr universell einsetzbar und einfach und damit kostengünstig herstellbar.

Nach Anspruch 2 ist an wenigstens einer der Befestigungsschrauben ein U-förmiges Sicherungsfangblech angeschraubt. Das Sicherungsfangblech hat zwei rechteckige U-Schenkel mit je einer Bohrung. Der erste U-Schenkel ist mit einer Befestigungsschraube mit der Aufnahmeplatte verschraubt. Der zweite U-Schenkel hat eine Fangbohrung, die dem Durchmesser des Zylinderkopfs einer Sicherungsschraube entspricht, die an dem ersten Bauteil befestigt ist. Diese Sicherungsschraube kann vorzugsweise auch eine der Befestigungsschrauben sein. Der Zylinderkopf dieser Sicherungsschraube ist so angeordnet, dass beim Zusammenfügen des Beschlags der zweite U-Schenkel über diesen Zylinderkopf geschoben wird. Um diesen Vorgang zu ermöglichen, ist der U-Schenkel leicht abgewinkelt, so dass er federnd auf den Zylinderkopf aufgleitet, d. h. dass er dabei leicht verbogen wird. Wenn der Hochlastbeschlag vollständig verbunden ist, d. h. die Endposition erreicht hat, liegt die Fangbohrung über dem Zylinderkopf und der U-Schenkel federt zurück, so dass der Zylinderkopf in die Fangbohrung hinein ragt.

Nach Anspruch 3 ist im Bereich der halbkreisförmige Ausnehmung in der Aufnahmeplatte ein Fangbügel aus Federdraht federnd eingesetzt, der die halbkreisförmige Ausnehmung zu einem Vollkreis ergänzt, wobei beim Zusammenfügen der Fangbügel über den Kopf der Halteschraube schnappt.

Die Erfindung wird nachfolgend an Hand von bevorzugten Ausführungsbeispielen in Verbindung mit beigefügten Zeichnungen näher erläutert.
- Fig. 1A und 1B: zeigen eine perspektivische Darstellung des erfindungsgemäßen Beschlags in einer ersten Ausführungsform.
- Fig. 2A und 2B: zeigen eine perspektivische Darstellung des Beschlags nach Fig. 1 an zwei Bauteilen mit einem Sicherungsfangblech.
- Fig. 3A bis 3D: zeigen eine Darstellung des Sicherungsfangblechs und dessen Funktion.
- Fig. 4A bis 4C: zeigen eine Darstellung des Sicherungsfangblechs und dessen Funktion an dem Beschlag nach Fig. 1.
- Fig. 5A und 5B: zeigen eine zweite Ausführungsform der Erfindung.
- Fig. 6: zeigt eine zweite Ausführungsform der Erfindung in einer Einbauposition.
- Fig. 7A und 7B: zeigen eine Darstellung des Sicherungsfangbügels für den kegelförmigen Kopf des Halteelements.
- Fig. 8A und 8B: zeigen eine weitere Ausführungsform der Erfindung gemäß Fig. 1.

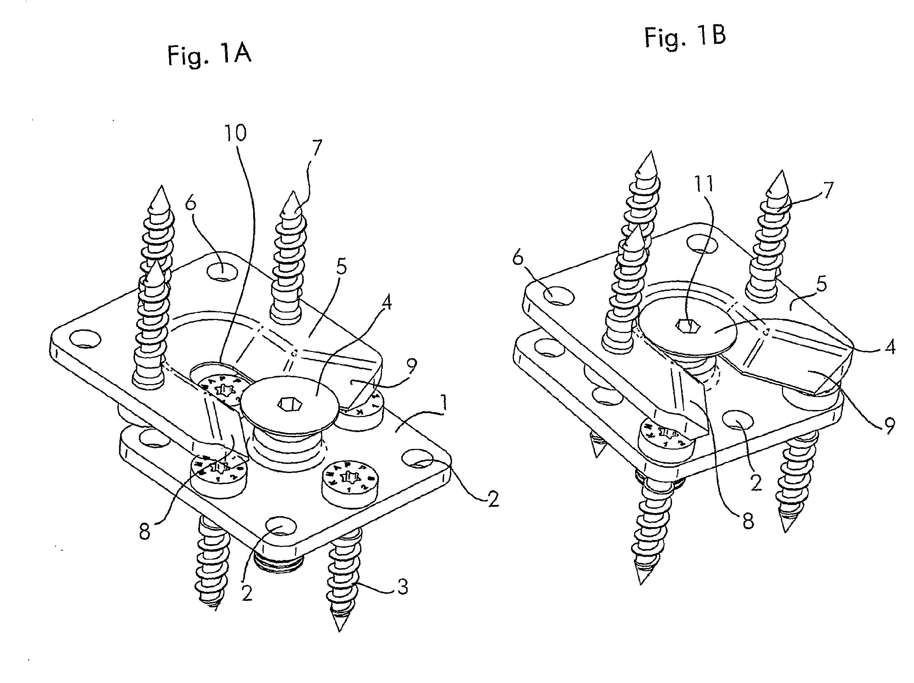

Die Fig. 1A und 1 B zeigen eine perspektivische Darstellung des erfindungsgemäßen Beschlags in einer ersten Ausführungsform in einer halb geöffneten und in einer geschlossenen Position.

Der Hochlastbeschlag besteht aus einem Halteteil und einem Aufnahmeteil, die jeweils an einem der Bauteile befestigt sind und beim Verbinden der Bauteile in miteinander in Eingriff gebracht werden. Das Halteteil besteht aus einer Halteplatte 1 und einem Halteelement 4. Die Halteplatte 1 hat eine Mehrzahl von Befestigungsbohrungen 2, so dass die Halteplatte vorzugsweise mittels Befestigungsschrauben 3 an dem ersten Bauteil befestigt werden kann. Innerhalb des Bereichs der Befestigungsbohrungen 2 ist das Halteelement 4 mit einem zylindrischen Schaft und einem kegelförmigen Kopf angeordnet.

Das Aufnahmeteil besteht aus einer Aufnahmeplatte 5, die eine Mehrzahl von Befestigungsbohrungen 6 hat, so dass die Aufnahmeplatte 5 vorzugsweise mittels Befestigungsschrauben 7 an dem zweiten Bauteil befestigt werden kann. Weiterhin ist eine Aufnahmeausnehmung zur Aufnahme des Kopfs des Halteelements 4 vorgesehen. Diese Aufnahmeausnehmung erstreckt sich vom Rand V-förmig in das Zentrum der Aufnahmeplatte 5, wobei unter Zentrum der Bereich verstanden wird, der allseitig von den Befestigungsbohrungen 6 bzw. den Befestigungsschrauben 7 umgeben ist. In dem Zentrum ist eine halbkreisförmige Ausnehmung ausgebildet, in der das Halteelement 4 aufliegt. Die V-förmigen Ränder der Ausnehmung sind in einem vorbestimmten Winkel abgewinkelt. Ebenso ist die halbkreisförmige Ausnehmung in dem gleichen vorbestimmten Winkel abgewinkelt.

Bei der Herstellung der Aufnahmeplatte 5 aus Stahl wird mit einem Drückstempel in Verbindung mit einer Matrize zuerst die V-Form und der kreisförmige Abschluß ausgedrückt. Bei diesem Arbeitsgang werden die Ränder abgewinkelt und somit verformt, was zu einer starken Verfestigung des Materialgefüges im verformten Bereich führt. In einem zweiten Arbeitsschritt wird das nicht benötigte Material weggeschnitten.

Die Form der Aufnahmeausnehmung hat unterschiedliche Funktionen und Vorteile. Die V-Form dient zum "Einfangen" des Halteelements 4. Wenn das Bauteil z. B. mittels eines Krans eingehängt werden muß, wird vorzugsweise ein Beschlag mit einem breiten Eingangsbereich gewählt, da das Bauteil durch den Kran nicht sehr genau positioniert werden kann. Beim Einhängen kann es auch vorkommen, dass die Beschlaghälften aufeinander stoßen. Solche kaum vermeidbaren Vorgänge dürfen jedoch nicht zu einer Deformation, d. h. Beschädigung des Beschlags führen. Es ist daher von Vorteil, wenn gerade die Bereiche der Aufnahmeplatte, die beim Zusammenfügen am stärksten belastet werden könnten, auch besonders stabil ausgebildet sind.

Weiterhin gewährleistet die V-Form der Aufnahmeausnehmung in Verbindung mit dem runden Schaft des Halteelements 4 und seinem kegelförmigen Kopf ein sehr einfaches Zusammenfügen des Beschlags, was auch mittels einer relativ ungenauen Kransteuerung erreichbar ist.

Die Abwinklung der Ränder der Aufnahmeausnehmung erzeugt einen Zwischenraum zwischen den Plattenoberflächen. Dieser Zwischenraum wird genutzt, da die Halteplatte und die Aufnahmeplatte mittels Zylinderkopfschrauben befestigt sind. Da die Köpfe dieser Schrauben nicht versenkt sind, stehen sie auf der Plattenoberfläche hervor und ragen somit in den Zwischenraum, der durch die Abwinklung entstanden ist. Es ist sehr vorteilhaft, für einen Hochlastbeschlag derartige Zylinderkopfschrauben zu verwenden, da diese einen hohen Anpreßdruck ermöglichen.

Das Halteelement 4 ist in dem vorliegenden Ausführungsbeispiel als eine Schraube mit einem Maschinengewinde gezeigt, es kann jedoch auch als ein Gewinde einer Holzschraube ausgebildet sein. Dieses Halteelement 4 wird ebenso wie die Befestigungsschrauben 3 zur Befestigung der Halteplatte 1 in das Bauteil eingeschraubt. Die Halteplatte 1 hat daher eine Durchgangsbohrung, durch die sich das Halteelement 4 erstreckt. Zur Erhöhung der Belastbarkeit kann der Schaft des Halteelements in dem Bereich, in dem er die Durchgangsbohrung berührt, als eng tolerierte Passung ausgebildet sein, so dass die bei der betriebsmäßigen Belastung auftretenden Scherkräfte auch mit über die Halteplatte 1 abgefangen werden.

Falls es erforderlich ist, das Spiel zwischen den zu verbindenden Bauteilen einzustellen, so kann das über den Innensechskant 11 erfolgen.

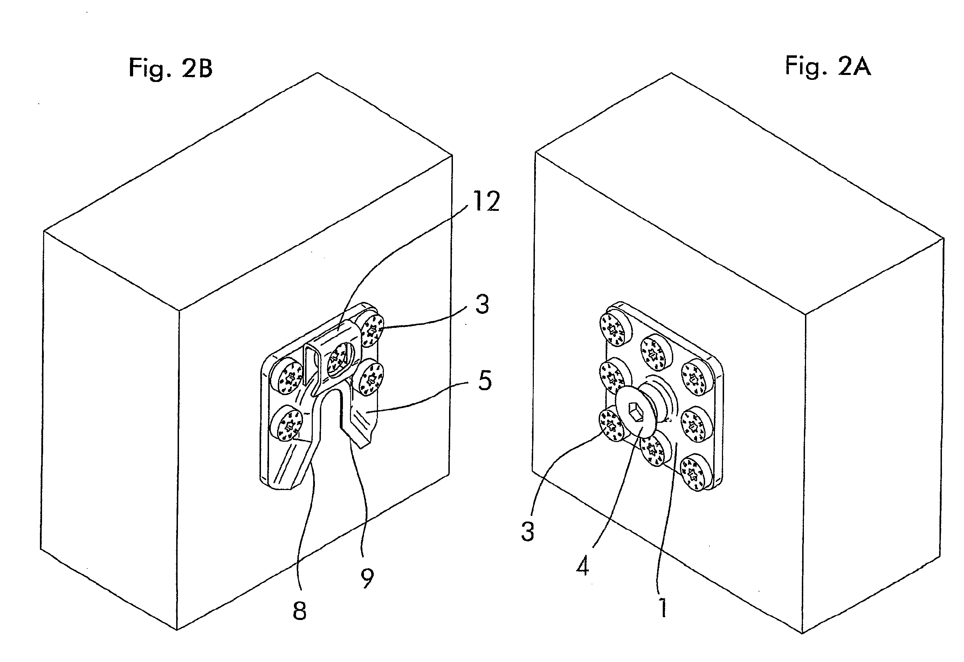

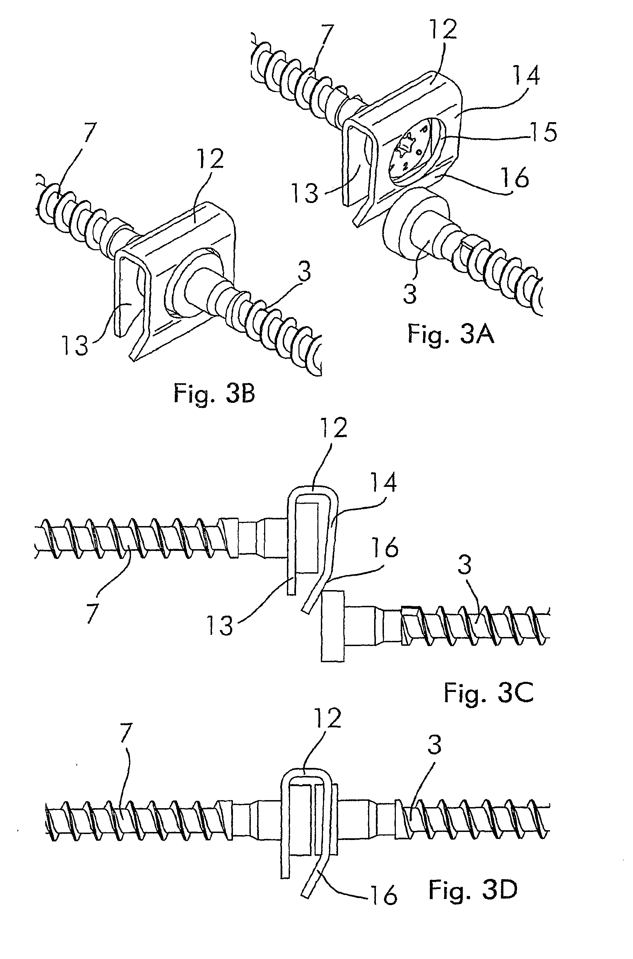

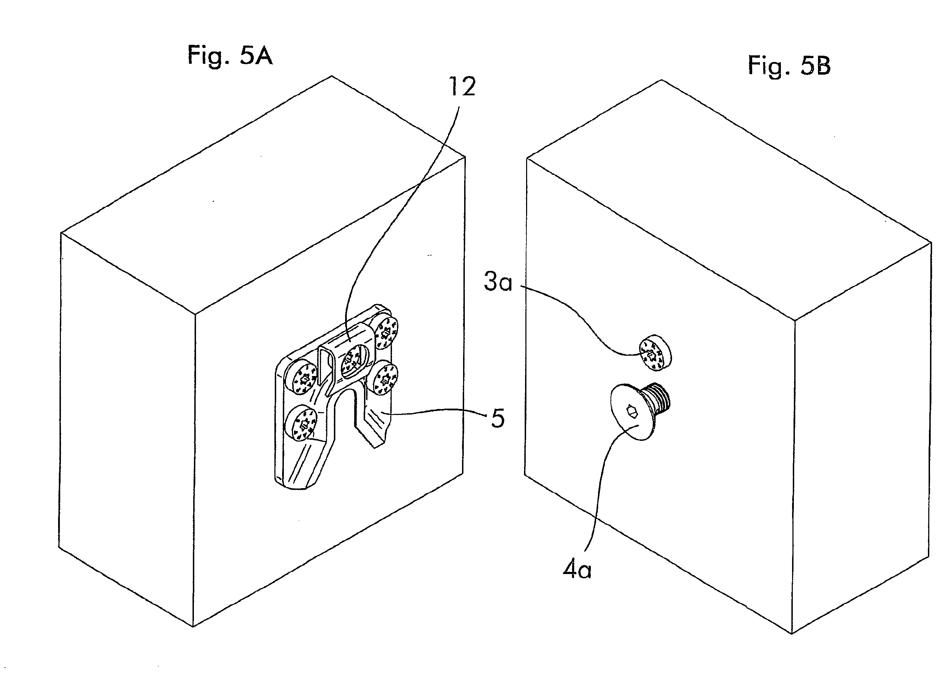

Die Fig. 2A und 2B zeigen eine perspektivische Darstellung des Beschlags nach Fig. 1 an zwei Bauteilen mit einem Sicherungsfangblech 12, welches dazu dient, die Beschlaghälften miteinander zu verriegeln und ein unerwünschtes nachträgliches Lösen der Verbindung zu vermeiden. Das Sicherungsfangblech 12 hat zwei rechteckigen U-Schenkel mit je einer Bohrung. Der erste U-Schenkel 13 ist mit einer Befestigungsschraube mit der Aufnahmeplatte 5 verschraubt. Der zweite U-Schenkel 14 hat eine Fangbohrung 15 (s. Fig. 3A), die dem Durchmesser des Zylinderkopfs der Befestigungsschraube entspricht. Eine der Befestigungsschrauben ist so positioniert, dass beim Zusammenfügen des Beschlags der zweite U-Schenkel über den Zylinderkopf dieser Befestigungsschraube geschoben wird. Um diesen Vorgang zu ermöglichen, ist dieser U-Schenkel leicht abgewinkelt, so dass er über die Schräge 16 federnd auf den Zylinderkopf aufgleitet, wobei er elastisch verbogen wird. Wenn der Hochlastbeschlag vollständig verbunden ist, d. h. die Endposition erreicht hat, liegt die Fangbohrung 15 genau über dem Zylinderkopf der Befestigungsschraube, so dass der U-Schenkel zurückfedert und der Zylinderkopf in die Fangbohrung hinein ragt. Es ist besonders zu erwähnen, dass es zweckmäßig ist, für diese Sicherung eine der Befestigungsschrauben zu verwenden. Es ist jedoch gleichfalls möglich, für die Sicherung eine separate Sicherungsschraube vorzusehen, wie z.B. in der Fig. 5B gezeigt.

Die Fig. 3A bis 3D zeigen eine Darstellung des Sicherungsblechs und seine Funktion mit einer separaten Sicherungsschraube aus unterschiedlichen Perspektiven, so dass das Aufgleiten und Einschnappen der Fangbohrung 15 verdeutlicht wird.

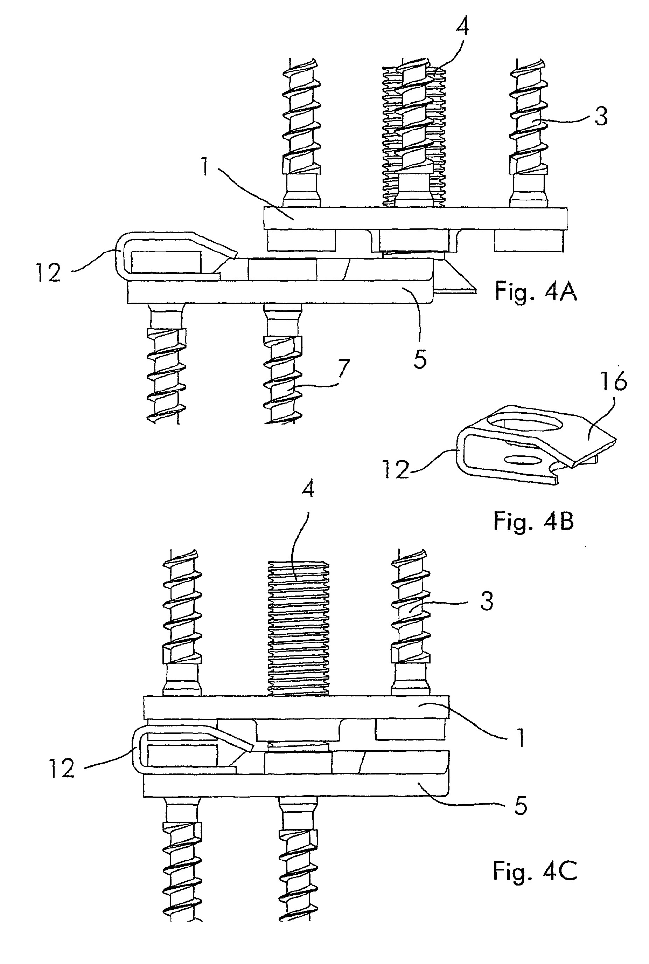

Die Fig. 4A bis 4C zeigen in einer selbsterklärenden Seitenansicht die Funktion des Sicherungsblechs beim Zusammenschieben des Beschlags.

Die Fig. 5A und 5B zeigt eine zweite Ausführungsform der Erfindung. Bei dieser Ausführungsform entfällt die Halteplatte 2, so dass in dem ersten Bauteil lediglich das Halteelement 4 und eine Sicherungsschraube 3a angeordnet sind. In dem zweiten Bauelement ist die Aufnahmeplatte mit einem Sicherungsblech angeschraubt. Das erste Bauelement kann z. B. ein Stahlträger sein, in dem das Halteelement 4 sicher verankert werden kann.

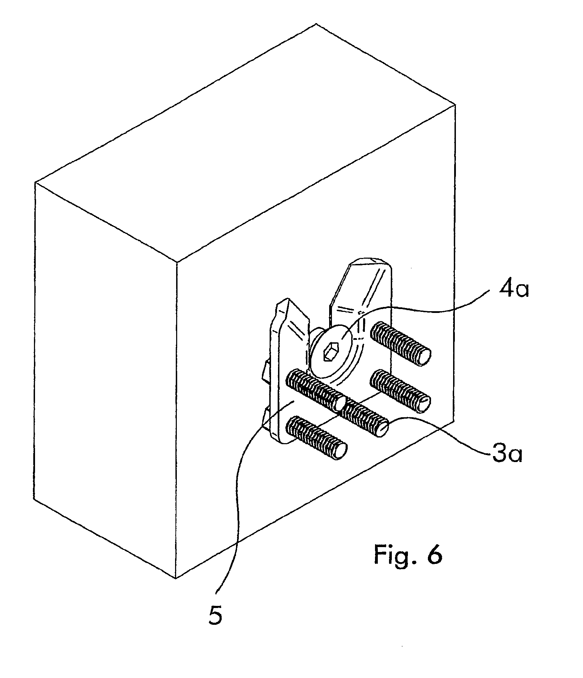

Die Fig. 6 zeigt eine Einbausituation eines Beschlags nach Fig. 5. In diesem Fall sind Sechskant-Maschinenschrauben zur Befestigung der Aufnahmeplatte 5 vorgesehen.

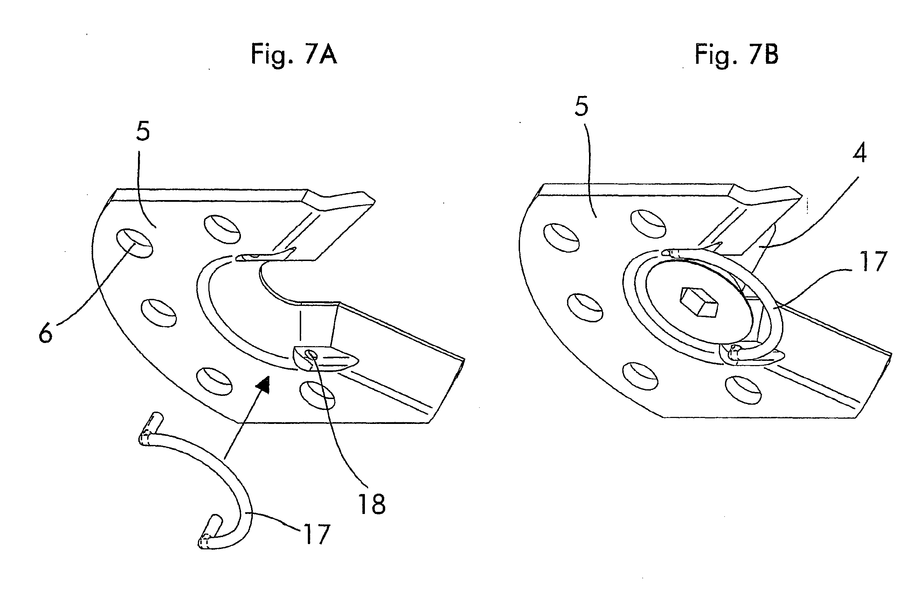

Die Fig. 7 zeigt die Aufnahmeplatte 5 mit einem Fangbügel 17, der vorgespannt in Bohrungen 18 der Aufnahmeplatte 5 eingesetzt ist. Wenn der Beschlag geschlossen wird, schnappt der Fangbügel 17 über dem kegelförmigen Kopf des Halteelements 4, d.h. der Fangbügel 17 muß für diese Funktion entsprechend gebogen sein. Dieser Fangbügel kann als eigenständige oder zusätzliche Sicherung dienen.

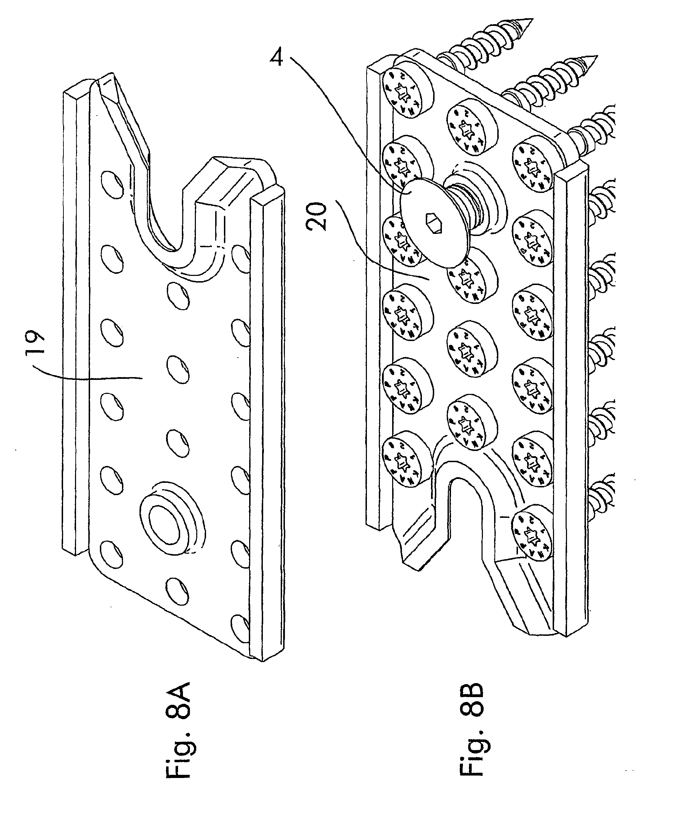

Die Fig. 8 zeigt einen Beschlag mit zwei Platten, deren Endabschnitte jeweils eine Halteplatte und eine Aufnahmeplatte aufweisen, so dass ein Doppelbeschlag gebildet wird. Die Funktion der beiden miteinander über die Mittelabschnitte 19 und 20 verbundenen Beschläge an den jeweiligen Endabschnitten dieser Platten entspricht der von Fig. 1. Es ist für den Fachmann klar, dass auf jeder Platte auch mehrere Halteelemente und die gleiche Anzahl von Aufnahmeausnehmungen nebeneinander angeordnet sein können, um unterschiedlichsten Anforderungen gerecht zu werden.

## Patentansprüche

1. Hochlastbeschlag zum Verbinden zweier Bauteile, der
- ein Halteteil und
- ein Aufnahmeteil aufweist, wobei
das Halteteil und das Aufnahmeteil jeweils an einem der Bauteile befestigbar sind und miteinander in Eingriff bringbare Elemente aufweisen, die das funktionelle Zusammenhalten der Bauteile bewirken, wobei
- das Halteteil ein Halteelement **(4)** mit einem Schaft und einem kegelförmigen Kopf **(4a)** ist, der eine Justierausnehmung **(11)** aufweist und
- das Aufnahmeteil nachfolgende Merkmale aufweist:
- Befestigungsschrauben **(7)** mit Zylinderkopf
- eine Aufnahmeplatte **(5)** mit
- einer Mehrzahl von Befestigungsbohrungen **(6),** durch die die Befestigungsschrauben **(7)** mit Zylinderkopf verlaufen zum Befestigen der Aufnahmeplatte **(5)** an dem zweiten Bauteil,
- korrespondierend zum kegelförmigen Kopf des Halteelements **(4)** ist eine Aufnahmeausnehmung zum Aufnehmen des Kopfs vorgesehen, wobei
- die Aufnahmeausnehmung folgende Merkmale aufweist:
- einen Eingangsabschnitt mit V-förmigen Rändern **(8, 9)** und
- einen Endabschnitt, der als halbkreisförmige Ausnehmung **(10)** ausgebildet ist, deren Durchmesser dem Durchmesser des Schaftsdes Halteelements **(4)** entspricht, wobei
- die V-förmigen Ränder **(8, 9)** und die halbkreisförmige Ausnehmung **(10)** in einem vorbestimmten Winkel abgewinkelt sind, der mit dem Kopfflankenwinkel des kegelförmigen Kopfs des Halteelements **(4)** übereinstimmt und
- die Abwinklung der V-förmigen Ränder **(8, 9)** und der halbkreisförmigen Ausnehmung **(10)** so dimensioniert sind, dass die Zylinder-köpfe der Befestigungsschrauben **(7)** im Gebrauch in den Raum zwischen der Oberfläche der Aufnahmeplatte **(5)** und der Oberfläche des gegenüberliegenden Bauteils passen.

2. Hochlastbeschlag nach Anspruch 1, **dadurch gekennzeichnet, daß** an einer der Befestigungsschrauben **(7)** ein U-förmiges Sicherungsfangblech **(12)** mit zwei rechteckigen U-Schenkeln **(13, 14)** mit je einer Bohrung vorgesehen ist, wobei der erste U-Schenkel **(13)** mit einer der Befestigungsschrauben **(7)** an der Platte **(5)** angeschraubt ist und der zweite U-Schenkel **(14)** eine Fangbohrung **(15)** aufweist, die dem Durchmesser des Zylinderkopfs einer Sicherungsschraube **(3)** entspricht, wobei die Sicherungsschraube **(3)** so angeordnet ist, dass
- beim Zusammenschieben der Beschlaghälften der zweite U-Schenkel **(14)** über den Zylinderkopf dieser gegenüberliegenden Sicherungsschraube **(3)** geschoben wird, was durch eine vorderseitige Abwinklung **(16)** des federnden zweiten U-Schenkels **(14)** ermöglicht wird und dass
- bei vollständiger Verbindung des Beschlags der Zylinderkopf der Sicherungsschraube in die Fangbohrung **(15)** des zweiten U-Schenkels **(14)** hineinragt.

3. Hochlastbeschlag nach Anspruch 1, **dadurch gekennzeichnet, daß** im Bereich der halbkreisförmigen Ausnehmung **(10)** der Aufnahmeplatte **(5)** ein Fangbügel **(17)** aus Federdraht eingesetzt ist, der beim Zusammenfügen der Beschlaghälften über den kegelförmigen Kopf des Halteelements **(4)** schnappt.

## Claims

1. High load fitting for connecting two components, which comprises
- a holding part and
- a receiving part, wherein
the holding part and the receiving part are each attachable to one of the components and have elements which can be brought into meshing contact with each other, which effect the functional fixation of the components, wherein
- the holding part is a holding element (4) with a shaft and a conical head (4a), which has an adjustment recess (11) and
- the receiving part has the following features:
- fastening screws (7) with cylinder head
- a receiving plate (5) with
- a plurality of fastening bores (6), through which the fastening screws (7) with cylinder head run for fastening the receiving plate (5) to the second component,
- corresponding to the conical head of the holding element (4) a receiving recess for receiving the head is provided, wherein
the receiving recess has the following features:
- an entry section with v-shaped edges (8, 9) and
- an end section, which is designed as a semicircular recess (10), the diameter of which corresponds to the diameter of the shaft of the holding element (4), wherein
- the v-shaped edges (8, 9) and the semicircular recesses (10) are angled in a preset angle, which corresponds to the head flank angle of the conical head of the holding element (4) and
the angle of the v-shaped edges (8, 9) and the semicircular recess (10) are dimensioned such, that the cylinder heads of the fastening screws (7) during usage fit into the space between the inner surface of the receiving plate (5) and the surface of the opposed component.

2. High load fitting according to claim 1, **characterized in that** at one of the fastening screws (7) a u-shaped securing catch plate (12) having two rectangular legs (13, 14), each having a bore, is provided, wherein the first U-leg (13) is screwed onto the plate (5) with one of the fastening screws (7) and the second U-leg (14) has a catch bore (15), which corresponds to the diameter of the cylinder head of a securing screw (3), wherein the securing screw is arranged such, that
- during sliding together of the fitting halves, the second U-leg (14) is pushed over the cylinder head of the opposing securing screw (3), which is made possible by a front bent (16) of the resilient second U-leg (14) and that
- upon complete connection of the fitting, the cylinder head of the securing screw extends into the catch bore (15) of the second U-leg (14).

3. High load fitting according to claim 1, **characterized in that** in the area of the semicircular recess (10) of the receiving plate (5) a catch bracket (17) made of spring wire is inserted, which snaps over the conical head of the holding element (4) during connection of the fitting halves.

## Revendications

1. Armature à capacité élevée destinée à connecter deux composants qui présente :
- une partie de retenue et
- une partie de réception,
la partie de retenue et la partie de réception pouvant être fixées respectivement sur l'un des composants et présentant des éléments pouvant être amenés en engagement l'un avec l'autre et provoquant le maintien fonctionnel des composants,
- la partie de retenue étant un élément de retenue (4) avec une tige et une tête (4a) conique qui présente un évidement d'ajustement (11) et
- la partie de réception présentant les caractéristiques suivantes :
- - des vis de fixation (7) avec une tête cylindrique
- - une plaque de réception (5) avec
- -- une pluralité de perçages de fixation (6), au travers desquels les vis de fixation (7) avec une tête cylindrique s'étendent pour la fixation de la plaque de réception (5) sur le second composant,
- de manière à correspondre à la tête conique de l'élément de retenue (4), un évidement de réception est prévu pour la réception de la tête,
- - l'évidement de réception présentant les caractéristiques suivantes :
- -- une section d'entrée avec des bords en V (8, 9) et
- -- une section d'extrémité qui est réalisée comme un évidement semi-circulaire (10), dont le diamètre correspond au diamètre de la tige de l'élément de retenue (4),
- -- les bords en V (8, 9) et l'évidement semi-circulaire (10) étant coudés dans un angle prédéterminé qui coïncide avec l'angle du filet de la tête conique de l'élément de retenue (4) et
- -- le coudage des bords en V (8, 9) et de l'évidement semi-circulaire (10) étant dimensionné de sorte que les têtes cylindriques des vis de fixation (7) s'insèrent en usage dans l'espace entre la surface de la plaque de réception (5) et la surface du composant opposé.

2. Armature à capacité élevée selon la revendication 1, **caractérisée en ce qu'**une tôle de retenue de sécurité (12) en U avec deux branches de U (13, 14) rectangulaires avec chacune un perçage est prévue sur l'une des vis de fixation (7), la première branche du U (13) étant vissée avec l'une des vis de fixation (7) à la plaque (5) et la seconde branche du U (14) présentant un perçage de retenue (15) qui correspond au diamètre de la tête cylindrique d'une vis de blocage (3), la vis de blocage (3) étant disposée de sorte que :
- lors de l'emboîtement des moitiés d'armature, la seconde branche du U (14) soit poussée par la tête cylindrique de cette vis de blocage (3) opposée, ce qui est permis par un coudage avant (16) de la seconde branche du U élastique (14) et
- lors de l'assemblage complet de l'armature, la tête cylindrique de la vis de blocage pénètre dans le perçage de retenue (15) de la seconde branche du U (14).

3. Armature à capacité élevée selon la revendication 1, **caractérisée en ce qu'**un étrier de retenue (17) en fil d'acier pour ressort est inséré dans la zone de l'évidement semi-circulaire (10) de la plaque de réception (5), lequel étrier s'enclenche lors de l'assemblage des moitiés d'armature sur la tête conique de l'élément de retenue (4).
